# EUROPEAN PATENT SPECIFICATION

(11) **EP 0 976 775 B1**
(45) Date of publication and mention of the grant of the patent: **12.10.2005**
(21) Application number: 99114567.3
(22) Date of filing: 24.07.1999
(51) Int. Cl.: C08G 77/50, C08G 83/00

(54) **Carbosiloxane dendrimers**
Carbosiloxan-Dendrimer
Carbosiloxane-dendrimère

(30) Priority: 31.07.1998 JP 23015498; 27.08.1998 JP 25747898
(43) Date of publication of application: 02.02.2000
(73) Proprietor: Dow Corning Toray Silicone Company, Ltd., Tokyo 100-0005 (JP)
(72) Inventor: Yoshitake, Makoto, 2-2, Chigusa Kaigan, Ichihara-shi (JP); Onodera, Satoshi, 2-2, Chigusa Kaigan, Ichihara-shi (JP)
(74) Representative: Sternagel, Fleischer, Godemeyer & Partner

(56) References cited:
- EP-A- 0 743 313
- EP-A- 0 962 482
- DE-C- 19 711 650
- PATENT ABSTRACTS OF JAPAN vol. 1995, no. 04, 31 May 1995 (1995-05-31) & JP 07 017981 A (SHIN ETSU CHEM CO LTD), 20 January 1995 (1995-01-20)
- SERGEI S. SHEIKO ET AL: "SOLID-LIKE STATES OF A DENDRIEMR LIQUID DISPLAYED BY SCANNING FORCE MICROSCOPY" MACROMOL. RAPID COMMUN., vol. 17, 1996, pages 283-297, XP002125344
- IGNAT'EVA G M ET AL: "UNIVERSAL SCHEME FOR THE SYNTHESIS OF ORGANOSILICON DENDRIMERS" POLYMER SCIENCE: SERIE A,US,INTERPERIODICA, vol. 39, no. 8, page 843-852 XP000723763 ISSN: 0965-545X
- ATSUSHI MORIKAWA ET AL: "SYNTHESIS AND CHARACTERIZATION OF NEW POLYSILOXANE STARBURST POLYMERS" MACROMOLECULES, vol. 24, no. 12, 10 June 1991 (1991-06-10), pages 3469-3474, XP002125345
- PONOMARENKO S A ET AL: "SYNTHESIS OF THE FIRST-FIFTH GENERATIONS OF CARBOSILANE LIQUID- CYRSTALLINE DENDRIMERS CONTAINING TERINAL CYANOBIPHENYL GROUPS" POLYMER SCIENCE: SERIE A,US,INTERPERIODICA, vol. 40, no. 8, page 763-774 XP000779826 ISSN: 0965-545X
- CHUNGKYUN K. AND KYUNGMI AN: "PREPARATION AND TERMINATION OF CARBOSILANE DENDRIMERS BASED ON A SILOXANE TETRAMER AS A CORE MOLECULE: SILANE ARBOROLS, PART VIII" JOURNAL OF ORGANOMETALLIC CHEMISTRY, vol. 547, pages 55-63, XP002125346

## Description

This invention relates to a novel carbosiloxane dendrimer that has a highly branched structure in which the siloxane bond and silalkylene bond alternate, that contains at least one substituted or unsubstituted hydrocarbon group at a terminal position, that can also be prepared in a high-molecular-weight form, and that exhibits a narrow molecular weight distribution and to a process for its production.

Dendrimers are polymers with a narrow molecular weight distribution that have a highly branched structure which elaborates radially from a single core. Dendrimers are characterized by a low viscosity, high reactivity, high solubility, and low glass-transition temperature and as a consequence their applications have been the subject of study. The following are examples of the already known organosilicon dendrimers: siloxane dendrimers (refer to Rebrov et al., *Dokl. Acad. Nauk. SSSR*, 309, 367 (1989) and Masamune et al., *J. Am. Chem. Soc.*, 112, 7077 (1990)), carbosiloxane dendrimers (refer to Kakimoto et al., *Macromolecules*, 24, 3469 (1991); Japanese Published Patent Application (Kokoku or Examined) Number Hei 7-17981 (17,981/1995); and Sheiko et al., *Macromol. Rapid Commun*., 17, 283 (1996)), and carbosilane dendrimers (refer to Roovers et al., *Macromolecules*, 26, 963 (1993) and Japanese Published Patent Application (Kokoku or Examined) Number Hei 8-311205 (311,205/1996)). This literature also discloses carbosiloxane dendrimers in which the siloxane bond and silalkylene bond occur in alternation (refer to Japanese Published Patent Application (Kokoku or Examined) Number Hei 7-17981 and Sheiko et al., *Macromol. Rapid Commun.*, 17, 283 (1996)). However, the carbosiloxane dendrimers disclosed therein are limited to dendrimers in which the starting reagent that forms the dendrimer core is a silane compound bearing a plural number of vinyl or allyl groups bonded to a single silicon atom, and the methods disclosed therein can only produce low-molecular-weight dendrimer at a low number of generations. The synthesis by a one-step polymerization method of highly branched polymer in which the siloxane bond and silalkylene bond alternate has also been disclosed (refer to Mathias et al., *J. Am. Chem. Soc.*, 113, 4043 (1991)), but this method cannot produce dendrimer with a narrow molecular weight distribution. In sum, then, there has yet to appear carbosiloxane dendrimer that has a highly branched structure in which the siloxane bond and silalkylene bond alternate, that can also be prepared in a high-molecular-weight form, and that exhibits a narrow molecular weight distribution and that preferably has subsituents.

The present inventors developed the present invention as a result of extensive investigations directed to solving the problems described above. In specific terms, the object of the present invention is to provide a novel carbosiloxane dendrimer that has a highly branched structure in which the siloxane bond and silalkylene bond alternate and having preferably subsituents.

### SUMMARY OF THE INVENTION

The present invention relates to a carbosiloxane dendrimer that contains at least one siloxane unit with the general formula

X¹R¹ ₐSiO_{(3-a)/2}

where R¹ is C₁ to C₁₀ alkyl or aryl, a is an integer from 0 to 2, and X¹ is the silylalkyl group with the following formula at i = 1 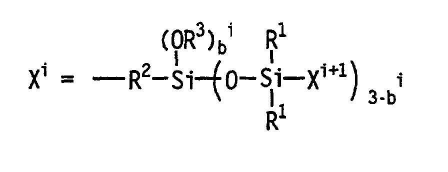 where R¹ is C₁ to C₁₀ alkyl or aryl , R² is C₂ to C₁₀ alkylene, R³ is C₁ to C₁₀ alkyl, Xⁱ⁺¹ is the above-defined silylalkyl group at i = i + 1 , an unsubstituted monovalent hydrocarbon group, a monovalent hydrocarbon group substituted by an atom other than a carbon or hydrogen atom, or a monovalent hydrocarbon group substituted by a group containing an atom other than a carbon or hydrogen atom, i is an integer with a value from 1 to 10 that specifies the generation of said silylalkyl group, and bⁱ is an integer from 0 to 3 with the proviso that b¹ in at least one X¹ in each molecule is an integer from 0 to 2, and which has at least one siloxy group represented by the general formula: 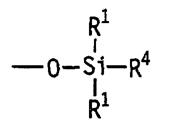 wherein R1 is a C₁ to C₁₀ alkyl or aryl group, and R⁴ is a monovalent unsubstituted hydrocarbon group, a monovalent hydrocarbon group substituted by an atom other than a carbon or hydrogen atom, or a monovalent hydrocarbon group substituted by a group containing an atom other than a carbon or hydrogen atom and
wherein when more than 1 siloxane unit is present the subject siloxane units may be the same or different. Preferably the carbosiloxane dendrimer comprises a polysiloxane structure that contains at least 2 silicon atoms as a core and at least one of the aforesaid siloxane units.

### DETAILED DESCRIPTION OF THE INVENTION

The carbosiloxane dendrimer according to the present invention characteristically has a polysiloxane structure that contains at least one siloxane unit with the general formula X¹R¹ₐSiO_{(3-a)/2} wherein when more than 1 siloxane unit is present the subject siloxane units may be the same or different. R¹ in this general formula is C₁ to C₁₀ alkyl or aryl. The alkyl encompassed by R¹ can be exemplified by methyl, ethyl, propyl, butyl, pentyl, isopropyl, isobutyl, cyclopentyl, and cyclohexyl, while the aryl encompassed by R¹ can be exemplified by phenyl and naphthyl. Methyl is preferred among the preceding. The subscript a is an integer with a value from 0 to 2. X¹ is the silylalkyl group with the following formula at i = 1 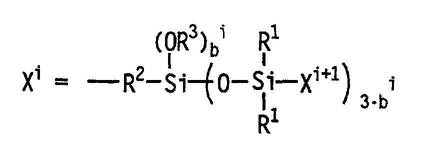 R¹ in this general formula is defined as above. R² in the preceding general formula is C₂ to C₁₀ alkylene, for example, straight-chain alkylene such as ethylene, propylene, butylene, and hexylene and branched alkylene such as methylmethylene, methylethylene, 1-methylpentylene, and 1,4-dimethylbutylene. Ethylene, methylmethylene, hexylene, 1-methylpentylene, and 1,4-dimethylbutylene are preferred for R². R³ is C₁ to C₁₀ alkyl, for example, methyl , ethyl , propyl, butyl , pentyl, and isopropyl, among which methyl and ethyl are preferred. Xⁱ⁺¹ is the above-defined silylalkyl group, an unsubstituted monovalent hydrocarbon group, a monovalent hydrocarbon group substituted by an atom other than a carbon or hydrogen atom, or a monovalent hydrocarbon group substituted by a group containing an atom other than a carbon or hydrogen atom. Preferred unsubstituted monovalent hydrocarbon groups are those having 1-30 carbon atoms. Typical examples are alkyl groups such as methyl, ethyl, propyl, butyl, pentyl, isopropyl, isobutyl, cyclopentyl and cyclohexyl groups; aryl groups such as phenyl, naphthyl, tolyl and xylyl groups; alkenyl groups such as vinyl, allyl, butenyl, pentenyl and hexenyl groups; and aralkyl groups such as benzyl and phenethyl groups.

The monovalent hydrocarbon group substituted by an atom other than a carbon or hydrogen atom, or the monovalent hydrocarbon group substituted by a group containing an atom other than a carbon or hydrogen atom, is a monovalent hydrocarbon group substituted by a known organic group which can be present in various silicone compounds. Preferred examples are at least one monovalent hydrocarbon group having 1-30 carbon atoms, substituted by an alcoholic hydroxyl group, a phenolic hydroxyl group, an amino group, an alkoxy group, carboxyl group, nitrile group, a halogen atom, a cyclic or non-cyclic ether-containing group or a carboxylic acid ester-containing group. Specifically, the hydrocarbon group substituted by the alcoholic hydroxyl group includes 3-hydroxypropyl group, hydroxymethyl group and (hydroxyethoxy)propyl group; the hydrogen group substituted by the phenolic hydroxyl group includes hydroxyphenyl group and (hydroxyphenyl)propyl group; the hydrocarbon group substituted by the amino group includes aminopropyl group, aminomethyl group, N-butylaminopropyl group, N-cyclohexylaminopropyl group, N,N-dibutylaminopropyl group and N, N-dibutylaminomethyl group; the hydrocarbon group substituted by the alkoxy group includes 3-butoxypropyl group and 3,3-dimethoxypropyl group; the hydrocarbon group substituted by the carboxyl group includes 3-carboxylpropyl group and 10-carboxydecyl group; the hydrocarbon group substituted by the nitrile group includes 2-cyanoethyl group and 3-cyanopropyl group; the hydrocarbon group substituted by the halogen atom includes 3-chloropropyl group, chloromethyl group, 3,3,3-trifluoropropyl group, p-chloromethylphenethyl group and nonafluorohexyl group; the hydrocarbon group substituted by the cyclic ether-containing group includes glycidoxypropyl group, 5,6-oxyranylbuthyl group and tetrahydrofurfuryloxypropyl group; the hydrocarbon group substituted by the non-cyclic ether containing group includes methoxyethoxypropyl group, polyoxyethlenylpropyl group and polyoxypropylenylpropyl group; the hydrocarbon group substituted by the carboxylic acid ester-containing group includes acetoxypropyl group and ethoxycarbonylpropyl group; the hydrocarbon group substituted by the phenolic hydroxyl group and the alkoxy group includes 4-hydroxy-3-methoxyphenylpropyl group; the hydrocarbon group substituted by the alcoholic hydroxyl group and the carboxylic acid ester-containing group includes 6-acetoxy-5-hydroxyhexyl group; the hydrocarbon group substituted by the alcoholic hydroxyl group, the carboxylic acid ester-containing group and the ether-containing group includes 7-acryloxy-6-hydroxy-4-oxaheptyl group.

i is an integer from 1 to 10 that indicates the number of generations of the silylalkyl group under consideration, i.e., it indicates the number of repetitions of this silylalkyl group. Thus, this silylalkyl group has the following general formula when the number of generations is 1: 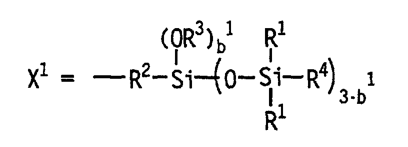 the following general formula when the number of generations is 2: 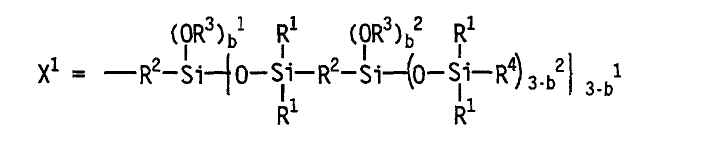 and has the following general formula when the number of generations is 3.

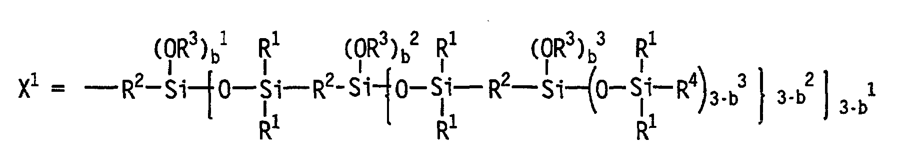

In these formulas, R¹, R², R³, b¹, b² and b³ each is defined as above. R⁴ is an unsubstituted monovalent hydrocarbon group, a monovalent hydrocarbon group substituted by an atom other than a carbon or hydrogen atom, or a monovalent hydrocarbon group substituted by a group containing an atom other than a carbon or hydrogen atom as exemplified for Xⁱ⁺¹ above. In a preferred embodiment of the present invention at least one of R⁴ in a molecule is a monovalent hydrocarbon group substituted by an atom other than a carbon or hydrogen atom, or a monovalent hydrocarbon group substituted by a group containing an atom other than a carbon or hydrogen atom. The substituted hydrocarbon group may be those shown for Xⁱ⁺¹.

The carbosiloxane dendrimer according to the present invention must contain at least 1 siloxane unit as represented by the general formula X¹R¹ₐSiO_{(3-a)/2} wherein when more than 1 siloxane unit is present the subject siloxane units may be the same or different and in a preferred embodiment comprises a polysiloxane structure having at least 2 silicon atoms forming the core of said carbosiloxane dendrimer. The structure may be a polysiloxane structure comprising siloxane units represented by the general formula X¹R¹ₐSiO_{(3-a)/2} (wherein X¹, R¹ and a are as defined above) or a polysiloxane structure comprising siloxane units represented by said general formula and also siloxane units represented by the general formula R¹_{c}SiO_{(4-c)/2} (wherein R¹ is as defined above and c is an integer of from 0 to 3). The structural units in this organosiloxane comprise monofunctional siloxane units (M units) with the general formulas X¹R¹₂SiO_{1/2} and R¹₃SiO_{1/2}, difunctional siloxane units (D units) with the general formulas X¹R¹SiO_{2/2} and R¹₂SiO_{2/2}, trifunctional siloxane units (T units) with the general formulas X¹SiO_{3/2} and R¹SiO_{3/2}, and the tetrafunctional siloxane unit (Q unit) SiO_{4/2}. The following are preferred embodiments of this organopolysiloxane: organopolysiloxane that contains at least one difunctional siloxane unit with the general formula R¹₂SiO_{2/2} or X¹R¹SiO_{2/2} (R¹ and X¹ are defined as above); organopolysiloxane that contains at least 5 silicon atoms and is composed of siloxane units selected from the general formulas R¹SiO_{3/2}, X¹SiO_{3/2}, R¹₃SiO_{1/2}, and X¹R¹₂SiO_{1/2} (R¹ and X¹ are defined as above); and organopolysiloxane that contains at least 6 silicon atoms and is composed of siloxane units selected from the general formulas SiO_{4/2}, R¹₃SiO_{1/2}, and X¹R¹₂SiO_{1/2} (R¹ and X¹ are defined as above). The subject carbosiloxane dendrimers can be more specifically exemplified by the following general formulas, in which X¹ and R¹ are defined as above and m, n, x, y, z, p, q, r, s, and t, which denote the number of siloxane units present in each molecule, have values ≥ 1 wherein p + q ≥ 5 and s + t ≥ 6.

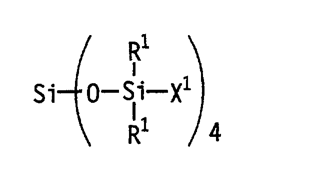

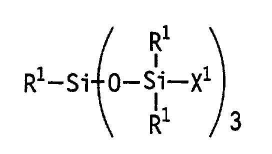

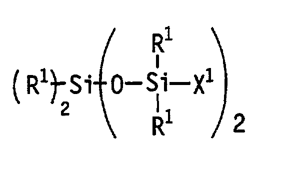

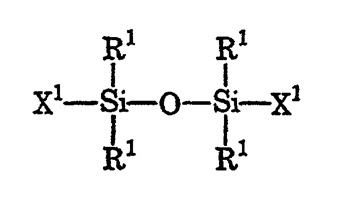

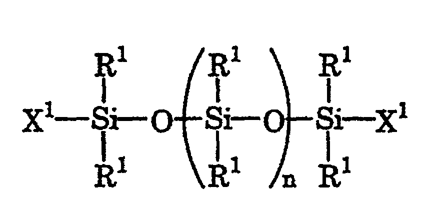

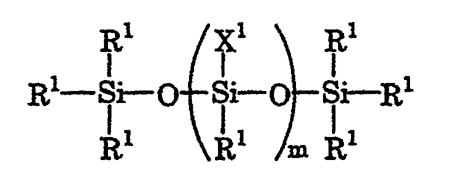

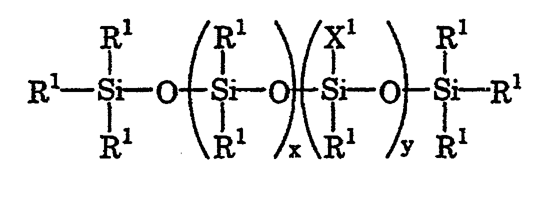

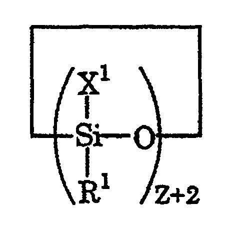

(X¹R¹ ₂SiO_{1/2})ₚ(R¹SiO_{3/2})_{q}

(X¹SiO_{3/2})ᵣ

(X¹R¹ ₂SiO_{1/2})ₛ(SiO_{4/2})ₜ

The carbosiloxane dendrimer according to the present invention can be prepared as a single compound or a mixture of compounds. The dispersity index of the molecular weight (polystyrene basis), that is, weight-average molecular weight/number-average molecular weight (M_{w}/Mₙ), is preferably ≤ 2.

According to a first embodiment of the present invention carbosiloxane dendrimers having an unsubsituted hydrocarbon group in a terminal position can be specifically exemplified by polymers with the following average molecular formulas.

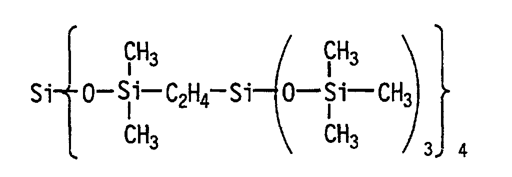

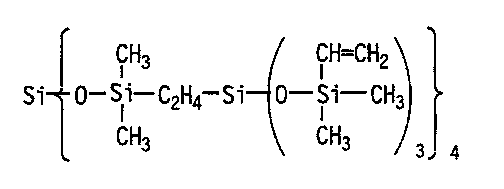

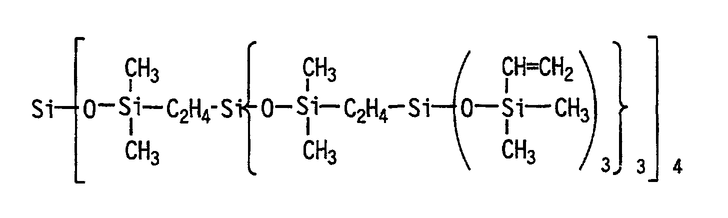

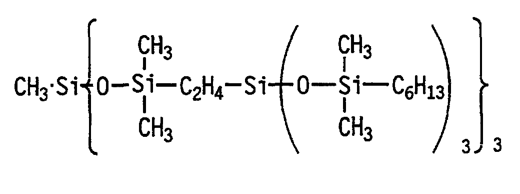

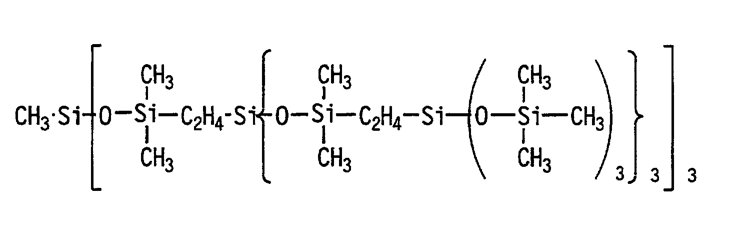

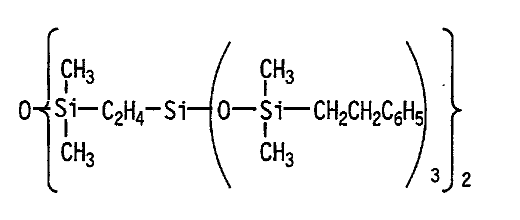

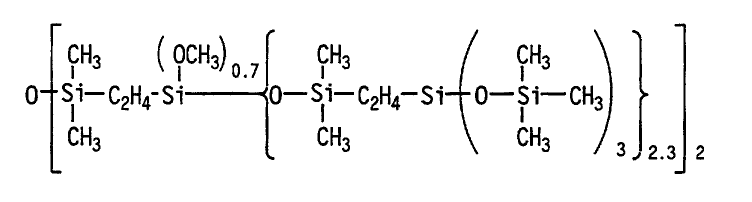

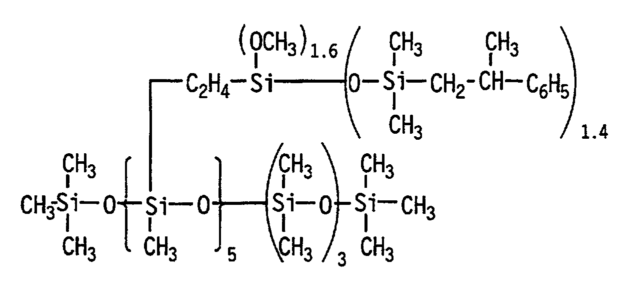

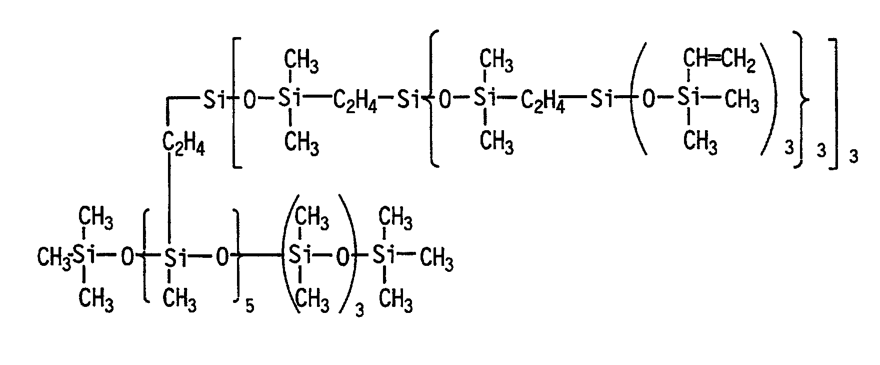

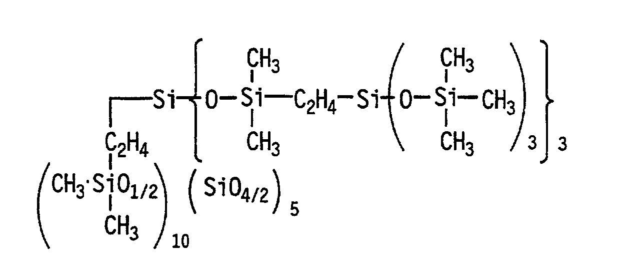

Specifically, the carbosiloxane dendrimers according to a second embodiment of the present Invention having a substituted hydrocarbon group can be represented by the following molecular formulae:

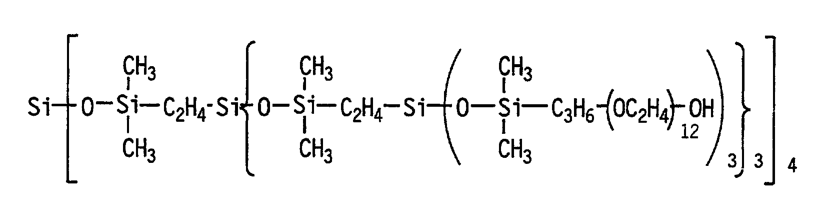

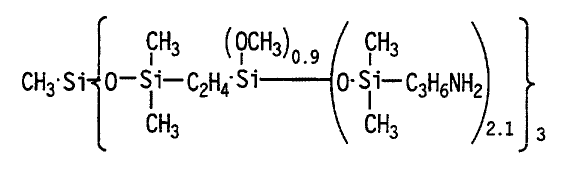

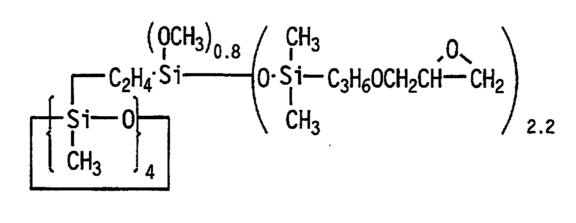

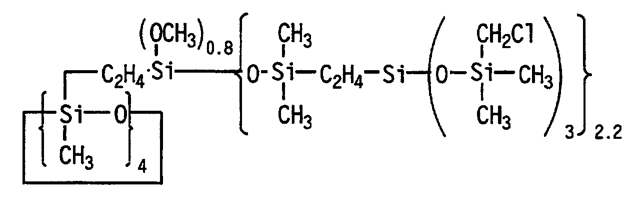

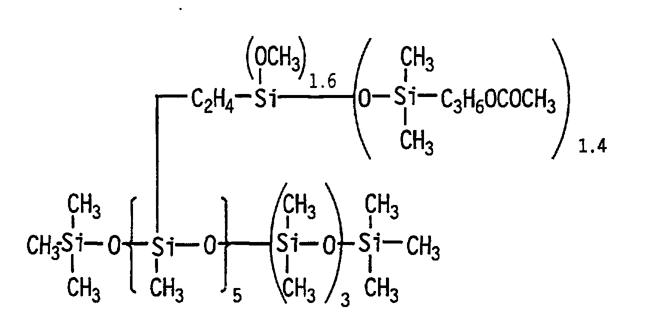

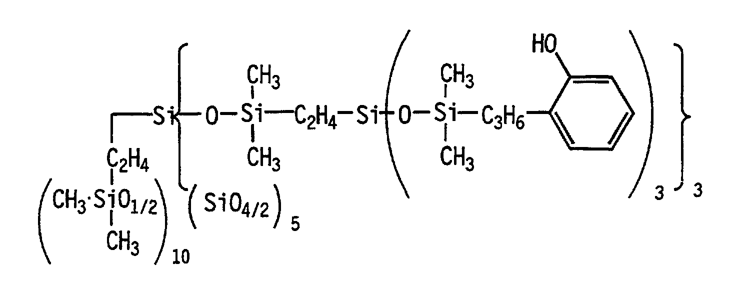

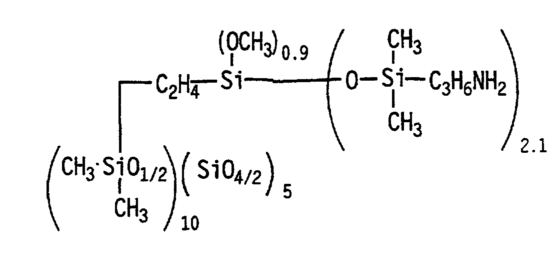

The carbosiloxane dendrimer of the present invention can be produced by carrying out either one of the following processes (x) and (w) at least once using, as starting material, silicon bonded hydrogen-containing polysiloxane that contains at least 2 silicon atoms, having the general formula HR¹ₐSiO_{(3-a)/2} (R¹ and a are as defined above) and, finally, the process (z) or (w). Specifically, there are methods comprising process (z) only, or processes (x) and (y) in alternation at least once and then process (z) after process (y) or process (w) after process (x).

### Process (x)

In this process, the above-mentioned starting material or the silicon bonded hydrogen-containing carbosiloxane dendrimer produced by the following process (y) is addition-reacted with alkenyl group-containing alkoxysilane represented by the general formula R⁵Si (OR³)₃ (R³ is as defined above and R⁵ is C2 to C10 alkenyl), in the presence of a platinum transition metal catalyst.

### Process (y)

The alkoxy group-containing carbosiloxane dendrimer obtained by process (x) is reacted under acidic conditions with a disiloxane represented by the general formula below (wherein R¹ is as defined above) :

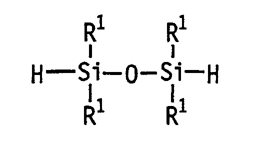

### Process (z)

The starting material or the carbosiloxane dendrimer obtained by process (y) is addition-reacted with a compound having one non-conjugated alkenyl group in a molecule in the presence of a platinum transition metal catalyst.

### Process (w)

The alkoxy group-containing carbosiloxane dendrimer obtained by process (x) is reacted under acidic conditions with disiloxane of the general formula below (wherein R¹ and R⁴ are as defined above):

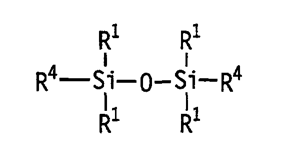

Examples of the platinum transition metal catalyst used in processes (x) and (z) are chloroplatinic acid, alcohol-modified chloroplatinic acid, platinum-olefin complexes, and platinum-diketonate complexes. The platinum transition metal-catalyzed addition reaction effected using the platinum transition metal catalyst is preferably run with a slight excess of the alkenyl group-containing compound in order to completely react the silicon bonded hydrogen present in the starting material. After the reaction, the excess alkenyl group-containing alkoxysilane can be fractionated off and recovered by, for example, distillation under reduced pressure. This addition reaction can be run at an ambient temperature or with heating and can be run in a solvent that does not inhibit the reaction. Examples of the alkenyl group-containing alkoxysilane used in process (x) are vinyltrimethoxysilane, vinyltriethoxysilane, hexenyltrimethoxysilane and hexenyltriethoxysilane.

In the first embodiment of the present invention preferred examples of the compound having one non-conjugated alkenyl group in a molecule used in process (z) may be butene, isobutene, hexene, octene, styrene, α-methylstyrene, vinyltris(trimethylsiloxy)silane and vinylbis(trimethylsiloxy)methoxysilane.

According to the second embodiment of the present invention compounds having, in a molecule, one non-conjugated alkenyl group and at least one atom other than a carbon or hydrogen atom or a group containing an atom other than a carbon or hydrogen atom are used in process (z). Preferred examples are alkenyl compounds having 30 or less carbon atoms. Said at least one atom or group is selected from the group consisting of an alcoholic hydroxyl group, a phenolic hydroxyl group, an amino group, an alkoxy group, a carboxyl group, a nitrile group, a halogen atom, a cyclic or non-cyclic ether-containing group and a carboxylic acid ester-containing group. Specific examples are allyl alcohol, allyloxy ethanol, o-allylphenol, allylamine, butylallyl ether, undecylenic acid, allyl cyanide, acrylonitrile, allyl chloride, allylglycidyl ether and allyl methacrylate.

The acidic substance used to produce the acidic condition in processes (y) and (w) is preferably hydrochloric acid, sulfuric acid, carboxylic acid or a mixture of the preceding. The silicon-bonded hydrogen is alcoholyzed in process (y) and as a result a small amount of the following monoalkoxysiloxy group may also be present. 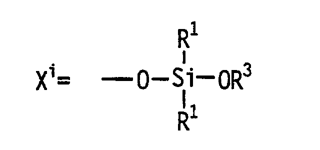 (wherein R¹ and R³ are as define above)

The above described carbosiloxane dendrimer of the present invention has a polysiloxane core and has a highly branched structure in which the siloxane bond and the silalkylene bond occur in alternation. It can be prepared in a high-molecular-weight form and it exhibits a narrow molecular weight distribution.

Since in the first embodiment of the present invention the terminals of the branched structure are all unsubstituted hydrocarbon groups, the carbosiloxane dendrimer has low viscosity in spite of the highly branched structure, has a glass transition temperature as low as that of linear polysiloxane, and is hard to be crystallized. Consequently, the carbosiloxane dendrimer according to the first embodiment of the present invention is useful a releasing agent, a lubricating agent and a resin filler.

According to the second embodiment of the present invention, the terminals of the branched structure have hydrocarbon groups substituted by various organic groups and, therefore, the physical property of the carbosiloxane dendrimer of the invention is governed by the chemical and physical properties of the organic groups. For example, the carbosiloxane dendrimer of the invention has hydrophilic groups of a polyether structure and the like and has high water solubility. The carbosiloxane dendrimer has reactive organic groups such as epoxy groups and amino groups and is characterized by high reactivity. Therefore, it is useful as a releasing agent, a lubricating agent, a resin modifying agent and a crosslinker.

### BRIEF DESCRIPTION OF THE DRAWINGS

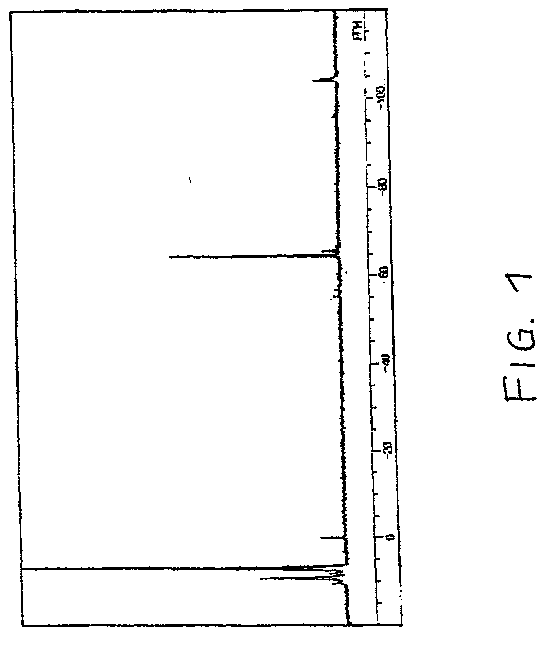

Figure 1 shows the ²⁹Si-nuclear magnetic resonance spectrum of the carbosiloxane dendrimer synthesized in Example 1.

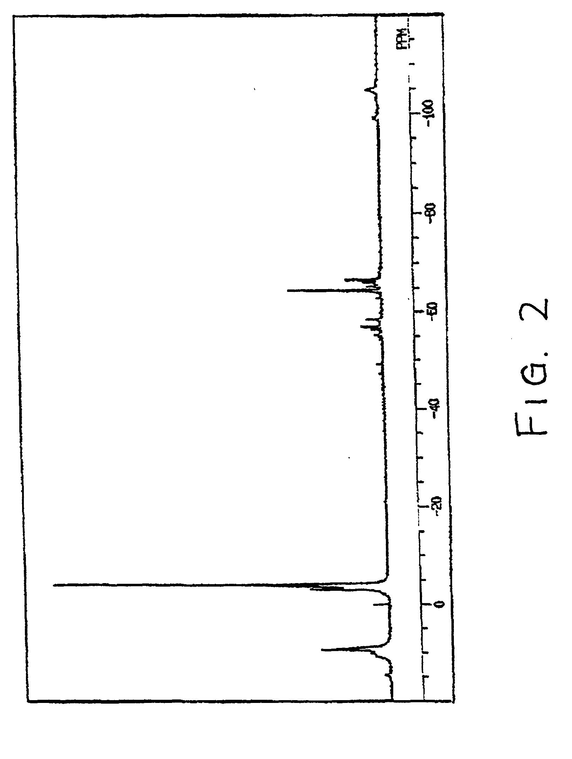

Figure 2 shows the ²⁹Si-nuclear magnetic resonance spectrum of the carbosiloxane dendrimer synthesized in Example 2.

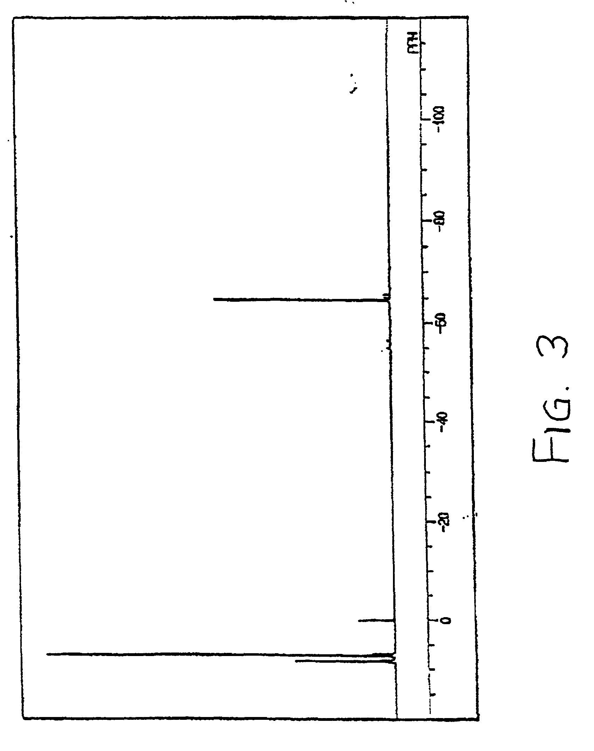

Figure 3 shows the ²⁹Si-nuclear magnetic resonance spectrum of the carbosiloxane dendrimer synthesized in Example 3.

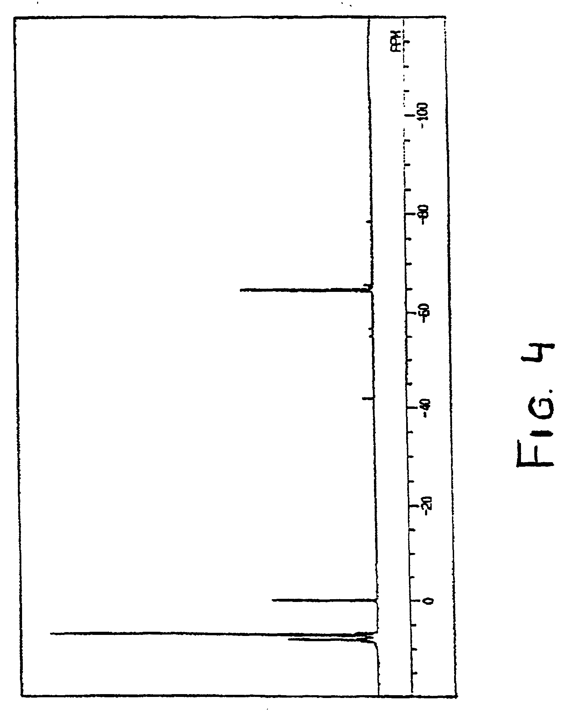

Figure 4 shows the ²⁹Si-nuclear magnetic resonance spectrum of the carbosiloxane dendrimer synthesized in Example 4.

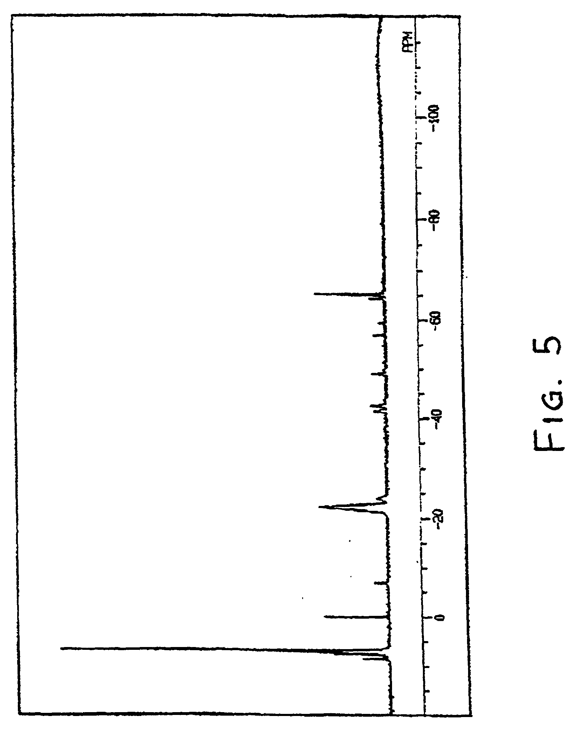

Figure 5 shows the ²⁹Si -nuclear magnetic resonance spectrum of the carbosiloxane dendrimer synthesized in Example 5.

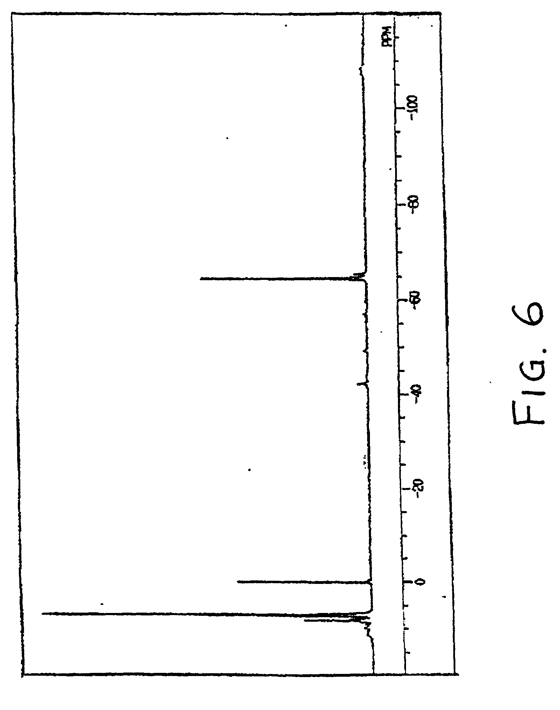

Figure 6 shows the ²⁹Si-nuclear magnetic resonance spectrum of the carbosiloxane dendrimer synthesized in Example 6.

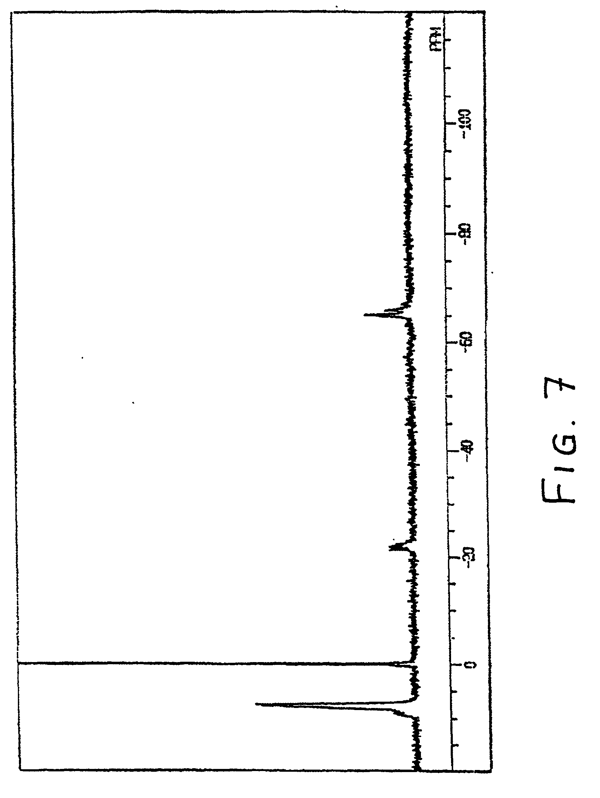

Figure 7 shows the ²⁹Si-nuclear magnetic resonance spectrum of the carbosiloxane dendrimer synthesized in Example 7.

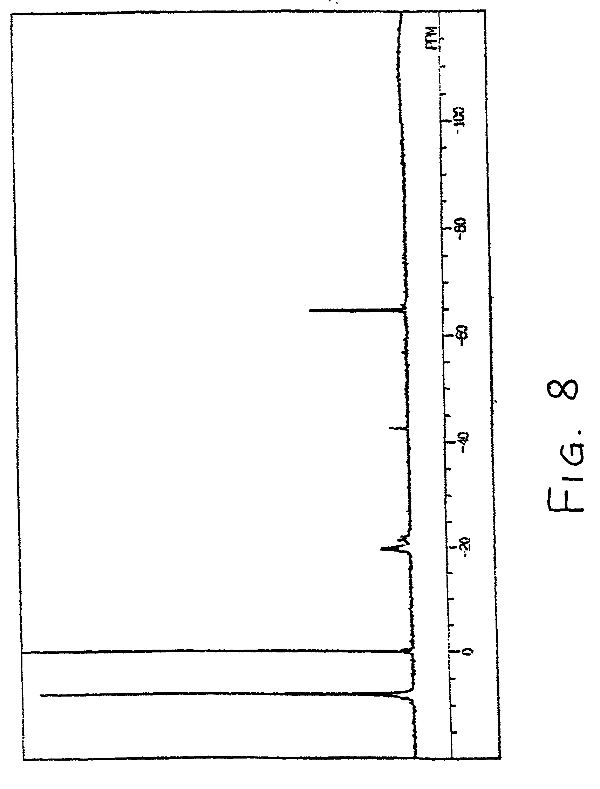

Figure 8 shows the ²⁹Si-nuclear magnetic resonance spectrum of the carbosiloxane dendrimer synthesized in Example 8.

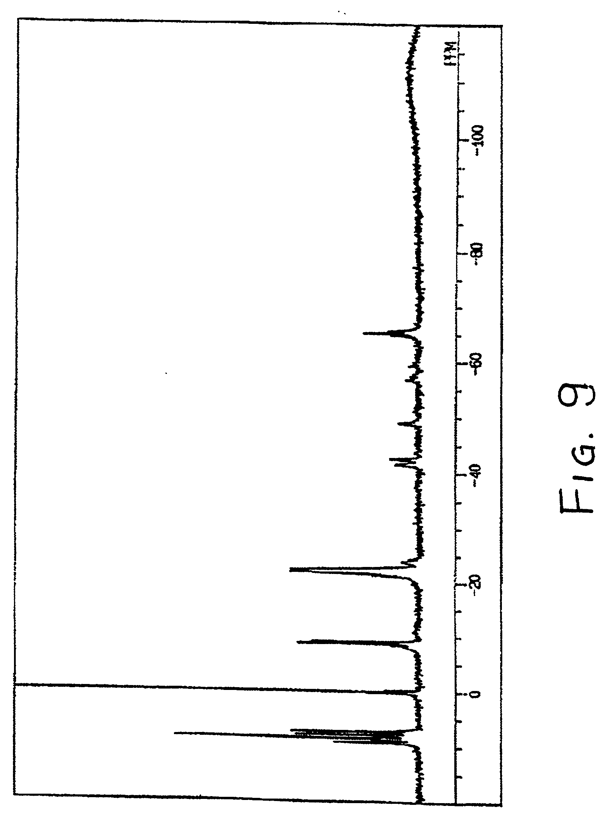

Figure 9 shows the ²⁹Si-nuclear magnetic resonance spectrum of the carbosiloxane dendrimer synthesized in Example 9.

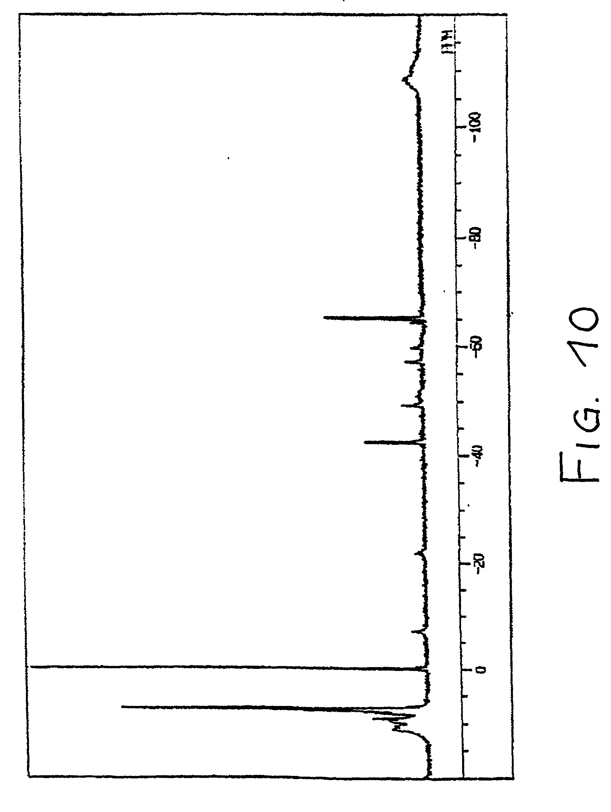

Figure 10 shows the ²⁹Si-nuclear magnetic resonance spectrum of the carbosiloxane dendrimer synthesized in Example 10.

### EXAMPLES

The invention will be explained in greater detail below using working examples, in which the carbosiloxane dendrimer according to the present invention was identified by ²⁹Si-nuclear magnetic resonance analysis and gel permeation chromatographic analysis (solvent: toluene).

### Example 1

35.5g of vinyltris(trimethylsiloxy)silane and 0.04 g of a 3% isopropanolic chloroplatinic acid solution were introduced into a 100-mL four-neck flask equipped with a stirrer, a thermometer, a reflux condenser, and an addition funnel and were heated to 100°C under stirring. To this was gradually added 8.2 g of tetrakis (dimethylsiloxy) silane dropwise from the addition funnel so as to maintain the reaction temperature at 100°C. After completion of the addition, the reaction solution was heated for 1 hour at 120°C. After cooling, the reaction solution was concentrated under reduced pressure to give 40.5 g of a very light brown liquid. It was confirmed that the viscosity of the obtained liquid at 25°C was 98 centistokes, the glass transition temperature measured by a differential scanning calorimeter was -85.1°C and no crystallization process as normally seen in straight-branched polydimethylsiloxane occurred. Analysis of this reaction product by ²⁹Si-nuclear magnetic resonance analysis showed it to be carbosiloxane dendrimer represented by the average molecular formula shown below. Using gel permeation chromatography, this carbosiloxane dendrimer was found to have a number-average molecular weight of 2,180 (polystyrene basis) and a dispersion index of 1.06.

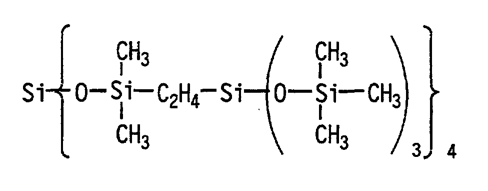

### Example 2

107 g of vinyltrimethoxysilane and 0.04 g of a 3% isopropanolic chloroplatinic acid solution were introduced into a 200-mL four-neck flask equipped with a stirrer, a thermometer, a reflux condenser, and an addition funnel and were heated to 100°C under stirring. To this was gradually added 49.4 g of tetrakis(dimethylsiloxy)silane dropwise from the addition funnel so as to maintain the reaction temperature at 100°C. After completion of the addition, the reaction solution was heated for 1 hour at 120°C. After cooling, the reaction solution was concentrated under reduced pressure to give 138 g of a very light brown liquid. The liquid was taken as intermediate A. 210 g of 1,1,3,3,-tetramethyl-1,3-divinyldisiloxane, 67.6 g of acetic acid and 0.20 g of trifluoromethane sulfonic acid were placed in a 2-liter four-neck flask equipped with a stirrer, a thermometer, a reflux condenser, and an addition funnel and were heated to 50°C under stirring. 120 g of the intermediate A prepared as described above was gradually added dropwise from the addition funnel for 1 hour. After completion of the addition, the reaction solution was stirred at 60°C for 5 hours. After cooling, the reaction solution was transferred to a separatory funnel. The solution was washed twice with 200 mL of water, then once with 100 mL of saturated aqueous sodium bicarbonate solution, and finally dried over anhydrous sodium sulfate. The solids were filtered off and the resulting solution was concentrated under reduced pressure to yield 212 g of a colorless and transparent liquid. Analysis of this reaction product by ²⁹Si-nuclear magnetic resonance analysis showed it to be carbosiloxane dendrimer represented by the average molecular formula given below having an average of 12 vinyl groups in each molecule. Using gel permeation chromatography, this carbosiloxane dendrimer was found to have a number-average molecular weight of 1,211 (polystyrene basis) and a dispersion index of 1.28.

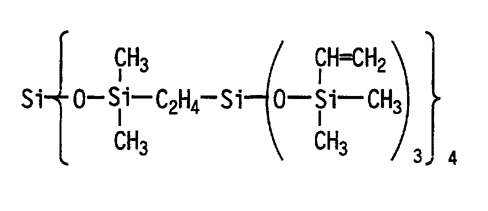

### Example 3

182 g of vinyltriethoxysilane and 0.28 g of a 3% isopropanolic chloroplatinic acid solution were introduced into a 300-mL three-neck flask equipped with a stirrer, a thermometer, a reflux condenser, and an addition funnel and were heated to 100°C under stirring. 100 g of methyltris(dimethylsiloxy)silane was gradually added dropwise from the addition funnel so as to maintain the reaction temperature at 100°C. After completion of the addition, the reaction solution was heated for 1 hour at 120°C. After cooling, the reaciton solution was concentrated under reduced pressure to give 266 g of a very light brown liquid. The liquid was taken as intermediate E. 127 g of 1,1,3,3,-tetramethyldisiloxane, 33 mL of concentrated hydrochloric acid, 66 mL of water and 66 mL of isopropanol were charged into a 500 mL four-neck flask equipped with a stirrer, a thermometer, a reflux condenser, and an addition funnel, and were stirred. 100 g of the intermediate E prepared as described above was then gradually added dropwise from the addition funnel for 1 hour. After completion of the addition, the reaction solution was stirred at room temperature for 1 hour. The reaction solution was transferred to a separatory funnel, the lower layer was separated off, and the remaining upper layer was washed twice with 30 mL of water, then once with 30 mL of saturated aqueous sodium bicarbonate solution, and finally dried over anhydrous sodium sulfate. The solids were filtered off and the resulting solution was concentrated under reduced pressure to yield 156 g of a colorless and transparent liquid. The liquid was taken as intermediate F. Finally, 30.0 g of the intermediate F prepared as above and 0.03 g of a 3% isopropanol solution were introduced into a 100 mL four-neck flask equipped with a stirrer, a thermometer, a reflux condenser and an addition funnel and were heated to 100°C under stirring. To this, 24.6 g of hexene was gradually added dropwise from the addition funnel so as to maintain the reaction temperature at 100°C. After completion of the addition, the reaction solution was heated for 1 hour at 100°C. After cooling, the reaction solution was concentrated under reduced pressure to yield 44.4 g of a very light brown liquid. Analysis of this reaction product by ²⁹Si-nuclear magnetic resonance analysis showed it to be carbosiloxane dendrimer represented by the average molecular formula given below. Using gel permeation chromatography, this carbosiloxane dendrimer was found to have a number-average molecular weight of 2,476 (polystyrene basis) and a dispersion index of 1.08.

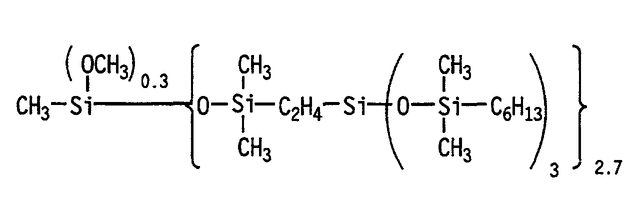

### Example 4

121 g of vinyltrimethoxysilane and 0.2 g of a 3% isopropanolic chloroplatinic acid solution were charged into a 200-mL four-neck flask equipped with a sitrrer, a thermometer, a reflux condenser and an addition funnel and were heated to 100°C under stirring. 50 g of 1,1,3,3-tetramethyldisiloxane was gradually added dropwise from the addition funnel so as to maintain the reaction temperature at 100°C. After completion of the addition, the reaction solution was heated for 1 hour at 120°C. After cooling, the reaction solution was concentrated under reduced pressure to give 158 g of a very light brown liquid. The liquid was taken as intermediate G. 180 g of 1,1,3,3 - tetramethyldisiloxane, 50 mL of concentrated hydrochloric acid, 100 mL of water and 100 mL of isopropanol were subsequently placed in a 1-L four-neck flask equipped with a stirrer, a thermometer, a reflux condenser and an addition funnel and were stirred. 158 g of the intermediate G prepared as described above was then gradually added dropwise from the addition funnel over 1 hour. After completion of the addition, the reaction solution was stirred at room temperature for 1 hour. The reaction solution was then transferred to a separatory funnel, the lower layer was separated off, and the remaining upper layer solution was washed twice with 100 mL of water, then once with 100 mL of saturated aqueous sodium bicarbonate solution, and finally dried over anhydrous magnesium sulfate. The solids were filtered off and the resulting solution was concentrated under reduced pressure to yield 233 g of a colorless and transparent liquid. The liquid was taken as intermediate H. Finally, 133 g of vinyltris(trimethylsiloxy)silane and 0.09 g of a 3% isopropanolic chloroplatinic acid solution were introduced into a 200mL four neck flask and were heated to 100°C under stirring. 40.0 g of the intermediate H prepared as above was gradually added dropwise from the addition funnel to maintain the reaction temperature of 100°C. After completion of the addition, the reaction solution was heated for 1 hour at 120°C. After cooling, the reaction solution was concentrated under a reduced pressure to give 127 g of a very light brown liquid. Analysis of this reaction product by ²⁹Si-nuclear magnetic resonance analysis showed it to be carbosiloxane dendrimer represented by the average molecular formula shown below. Using gel permeation chromatography, this carbosiloxane dendrimer was found to have a number-average molecular weight of 2,911 (polystyrene basis) and a dispersion index of 1.08.

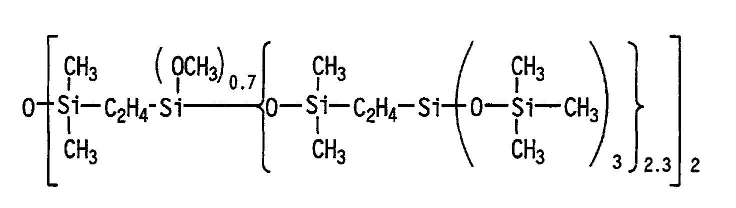

### Example 5

49.4 g of vinyltrimethoxysilane and 0.04 g of a 3% isopropanolic chloroplatinic acid solution were charged into a 100-mL four-neck flask equipped with a stirrer, a thermometer, a relux condenser and an addition funnel and were heated to 100°C under stirring. 30.0 g of polysiloxane represented by the average molecular formula shown below was gradually added dropwise from the addition funnel so as to maintain the reaction temperature at 100°C.

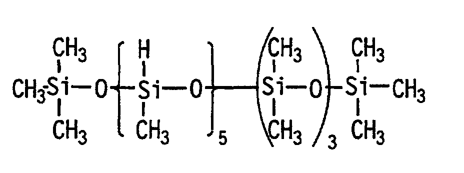

After completion of the addition, the reaction solution was heated for 1 hour at 120°C. After cooling, the reaction solution was concentrated under reduced pressure to give 63.1 g of a very light brown liquid. The liquid was taken as intermediate K. 33 g of1,1,3,3-tetramethyldisiloxane, 13 mL of concentrated hydrochloric acid, 27 mL of water and 27 mL of isopropanol were placed in a 200 mL four-neck flask equipped with a stirrer, a thermometer, a reflux condenser and an addition funnel and were stirred. To this, 40.0 g of the intermediate K prepared as described above was gradually added dropwise from the addition funnel for 1 hour. After completion of the addition, the reaction solution was stirred at room temperature for 1 hour. The reaction solution was transferred to a separatory funnel, the lower layer was separated off, and the remaining upper layer solution was washed twice with 20 mL of water, then once with 20 mL of saturated aqueous sodium bicarbonate solution, and finally dried over anhydrous magnesium sulfate. The solids were filtered off and the resulting solution was concentrated under reduced pressure to yield 45.4 g of a colorless and transparent liquid. The liquid was taken as intermediate L. Finally, 65.5 g of α-methylstyrene and 0.04 g of a 3% isopropanolic chloroplatinic acid solution were introduced into a 100-mL four-neck flask equipped with a stirrer, a thermometer, a reflux condenser and an addition funnel and were heated to 100ÚC under stirring. 24.0 g of the intermediate L obtained as described above was gradually added dropwise from the addition funnel so as to maintain the reaction temperature at 100ÚC. After completion of the addition, the reaction solution was heated for 1 hour at 120ÚC. After cooling, the reaction solution was concentrated under reduced pressure to give 35.1 g of a very light brown liquid. Analysis of this reaction product by ²⁹Si-nuclear magnetic resonance analysis showed it to be carbosiloxane dendrimer represented by the average molecular formula given below. Using gel permeation chromatography, this carbosiloxane dendrimer was found to have a number-average molecular weight of 3,830 (polystyrene basis) and a dispersion index of 1.75.

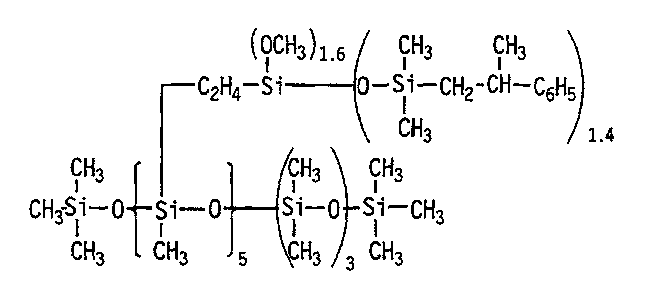

### Example 6

214 g of vinyltrimethoxysilane and 0.16 g of a 3% isopropanolic chloroplatinic acid solution were introduced into a 500-mL four-neck flask equipped with a stirrer, a thermometer, a reflux condenser and an addition funnel and were heated to 100°C under stirring. 100 g of polysiloxane represented by the average compositional formula {H(CH₃)₂SiO_{1/2}}₁₀(SiO_{4/2})₅ was gradually added dropwise from the addition funnel so as to maintain the reaction temperature at 100°C. After completion of the addition, the reaction solution was heated for 1 hour at 120°C. After cooling, the reaction solution was concentrated under reduced pressure to give 234 g of a very light brown liquid. The liquid was taken as intermediate M. 468 g of 1,1,3,3-tetramethyldisiloxane, 75 ml of concentrated hydrochloric acid, 150 mL of water and 150 mL of isopropanol were subsequently placed in a 1000 mL four-neck flask equipped with a stirrer, a thermometer, a reflux condenser and an addition funnel and were stirred. 220 g of the intermediate M prepared as described above was gradually added dropwise from the addition funnel for 1 hour. After completion of the addition, the reaction solution was stirred at room temperature for 1 hour. The reaction solution was subsequently transferred to a separatory funnel, washed twice with 200 mL of water, then once with 100 mL of saturated aqueous sodium bicarbonate solution, and finally dried over anhydrous magnesium sulfate. The produced solids were filtered off and the resulting solution was concentrated under reduced pressure to yield 273 g of a colorless and transparent liquid. The liquid was taken as intermediate N. 105 g of vinyltris(trimethylsiloxy)silane and 0.07 g of a 3% isopropanolic chloroplatinic acid solution were introduced into a 200-mL four-neck flask equipped with a stirrer, a thermometer, a reflux condenser and an addition funnel and were heated at 100°C under stirring. 35.0 g of the intermediate N obtained as described above was gradually added dropwise from the addition funnel so as to maintain the reaction temperature at 100°C. After completion of the addition, the reaction solution was heated for 1 hour at 120°C. After cooling, the reaction solution was concentrated under reduced pressure to give 80.3 g of a very light brown liquid. Analysis of this reaction product by ²⁹Si-nuclear magnetic resonance analysis showed it to be carbosiloxane dendrimer represented by the average molecular formula given below. Using gel permeation chromatography, this carbosiloxane dendrimer was found to have a number-average molecular weight of 6,586 (polystyrene basis) and a dispersion index of 1.14.

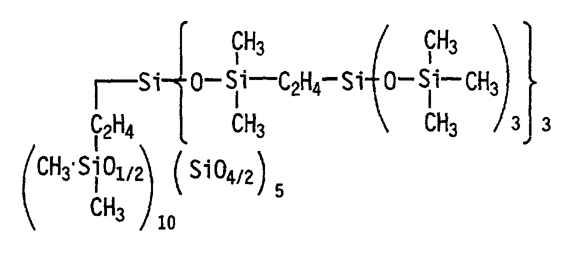

### Example 7

107 g of vinyltristrimethylsiloxysilane and 0.04 g of a 3% isopropanolic chloroplatinic acid solution were introduced into a 200-mL four-neck flask equipped with a stirrer, a thermometer, a reflux condenser, and an addition funnel and were heated to 100°C under stirring. To this was gradually added 49.4 g of tetrakis (dimethylsiloxy) silane dropwise from the addition funnel so as to maintain the reaction temperature at 100°C. After completion of the addition, the reaction solution was heated for 1 hour at 120°C. After cooling, the reaction solution was concentrated under reduced pressure to give 138 g of a very light brown liquid. The liquid was taken as intermediate A. 80.6 g of 1,1,3,3-tetramethyldisiloxane, 72.1 g of acetic acid and 0.11 g of trifluoromethane sulfonic acid were chared into a 300mL four-neck flask equipeed with a stirrer, a thermometer, a reflux condenser and an addition funnel and were heated 40°C under stirring. To this was gradually added dropwise from the addition funnel 76.8 g of the intermediate A prepared as described above for 1 hour. After completion of the addition, the reaction solution was stirred at 50°C for 1 hour. The reaction solution was transferred to a separatory funnel, the lower layer was separated off, and the remaining upper layer solution was washed twice with 50 mL of water, then once with 50 mL of saturated aqueous sodium bicarbonate solution, and dried over anhydrous magnesium sulfate. The solids were filtered off and the resulting solution was concentrated under reduced pressure to yield 119 g of a colorless and transparent liquid. The liquid was taken as intermediate B. Further, 88.9 g of vinylmethoxysilane and 0.04 g of a 3% isopropanolic chloroplatinic acid solution were introduced into a 200-mL four-neck flask equipped with a stirrer, a thermometer, a reflux condenser and an addition funnel and were heated to 100°C under stirring. 60.5 g of the intermediate B obtained as described above was gradually added dropwise from the addition funnel so as to maintain the reaction temperature at 100°C. After completion of the addition, the reaction solution was heated for 1 hour at 120°C. After cooling, the reaction solution was concentrated under reduced pressure to give 134 g of a very light brown liquid.. The liquid was taken as intemrediate C.

75.1 g of 1,1,3,3-tetramethyldisiloxane, 53.7 g of acetic acid and 66.9 g of the intermediate C obtained as above, were charged into a 300 mL four-neck flask equipped with a stirrer, a thermometer, a reflux condenser and an addition funnel and were heated to 50°C under stirring. To this was added 0.08 g of trifluoromethane sulfonic acid and the reaction solution was stirred at 50°C for 1 hour. The reaction solution was transferred to a separatory funnel, the lower layer was separated off, and the remaining upper layer solution was washed twice with 30 mL of water, then once with 30 mL of saturated aqueous sodium bicarbonate solution, and dried over anhydrous magnesium sulfate. The solids were filtered off and the resulting solution was concentrated under reduced pressure to yield 77.1 g of a colorless and transparent liquid. The liquid was taken as intermediate D. Finally, 46.1 g of one-end-arylated polyoxyethylene glycol (dodecamer) and 0.07 g of a 3% isopropanolic chloroplatinic acid ssolution were introduced into a 100-mL four-neck flask equipped with a stirrer, a thermometer, a reflux condenser and an addition funnel and were heated to 80°C under stirring. 15.0 g of the intermediate D obtained as described above was gradually added dropwise from the addition funnel so as to maintain the reaction temperature at 85°C. After completion of the addition, the reaction solution was heated for 1 hour at 100°C. After cooling, the reaction solution was concentrated under reduced pressure to give 64.0 g of a very light brown liquid. Analysis of this reaction product by ²⁹Si-nuclear magnetic resonance analysis showed it to be carbosiloxane dendrimer represented by the average molecular formula given below. Using gel permeation chromatography, this carbosiloxane dendrimer was found to have a number-average molecular weight of 2,603 (polystyrene basis) and a dispersion index of 1.32.

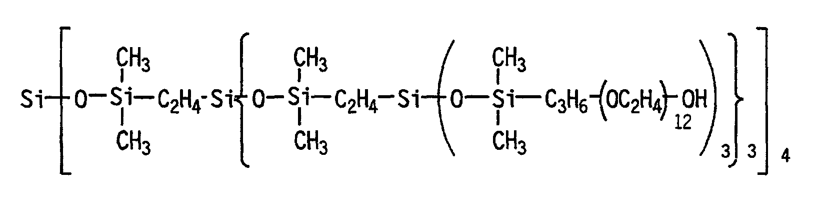

### Example 8

88.9 g of vinyltrimethoxysilane and 0.04 g of a 3% isopropanolic chloroplatinic acid solution were introduced into a 200-mL four-neck flask equipped with a stirrer, a thermometer, a reflux condenser, and an addition funnel and were heated to 100°C under stirring. To this was gradually added 30.1 g of 1,3,5,7-tetramethylcyclotetrasilane dropwise from the addition funnel so as to maintain the reaction temperature at 100°C. After completion of the addition, the reaction solution was heated for 1 hour at 120°C. After cooling, the reaction solution was concentrated under reduced pressure to give 100 g of a very light brown liquid. The liquid was taken as intermediate I. 93.0 g of 1,1,3,3-tetramethyldisiloxane, 27 mL of concentrated hydrochloric acid, 53 mL of water and 53 mL of isopropanol were placed in a 500 mL four-neck flask equipped with a stirrer, a thermometer, a reflux condenser, and an addition funnel and were stirred. 180.0 g of the intermediate I prepared as described above was gradually added dropwise from the addition funnel for 1 hour. After completion of the addition, the reaction solution was stirred at a room temperature for 1 hour. The reaction solution was transferred to a separatory funnel, the lower layer was separated off, and the remaining upper layer solution was washed twice with 50 mL of water, then once with 50 mL of saturated aqueous sodium bicarbonate solution, and dried over anhydrous magnesium sulfate. The solids were filtered off and the resulting solution was concentrated under reduced pressure to yield 98.5 g of a colorless and transparent liquid. The liquid was taken as intermediate J. Further, 45.7 g of allylglycidyl ether and 0.04 g of a 3% isopropanolic chloroplatinic acid solution were introduced into a 100-mL four-neck flask equipped with a stirrer, a thermometer, a reflux condenser and an addition funnel and were heated to 100°C under stirring. 35.0 g of the intermediate J obtained as described above was gradually added dropwise from the addition funnel so as to maintain the reaction temperature at 100°C. After completion of the addition, the reaction solution was heated for 1 hour at 120°C. After cooling, the reaction solution was concentrated under reduced pressure to give 60.0 g of a very light brown liquid.

Analysis of this reaction product by ²⁹Si-nuclear magnetic resonance analysis showed it to be carbosiloxane dendrimer represented by the average molecular formula given below. Using gel permeation chromatography, this carbosiloxane dendrimer was found to have a number-average molecular weight of 2,061 (polystyrene basis) and a dispersion index of 1.21.

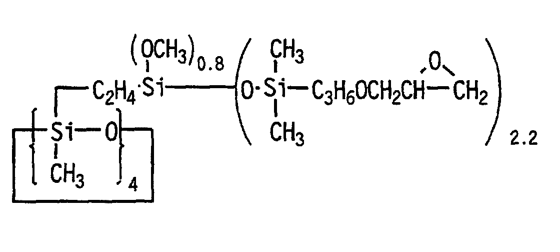

### Example 9

49.4 g of vinyltriethoxysilane and 0.04 g of a 3% isopropanolic chloroplatinic acid solution were introduced into a 100-mL four-neck flask equipped with a stirrer, a thermometer, a reflux condenser, and an addition funnel and were heated to 100°C under stirring. 30.0 g of polysiloxane of the average molecular formular shown below was gradually added dropwise from the addition funnel so as to maintain the reaction temperature at 100°C. 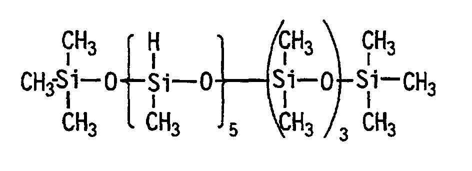 After completion of the addition, the reaction solution was heated for 1 hour at 120°C. After cooling, the reaction solution was concentrated under reduced pressure to give 63.1 g of a very light brown liquid. The liquid was taken as intermediate K. 33.9 g of 1,1,3,3-tetramethyldisiloxane, 13 mL of concentrated hydrochloric acid, 27 mL of water and 27 mL of isopropanol were charged into a 200 mL four-neck flask equipped with a stirrer, a thermometer, a reflux condenser, and an addition funnel, and were stirred. 40.0 g of the intermediate K prepared as described above was then gradually added dropwise from the addition funnel for 1 hour. After completion of the addition, the reaction solution was stirred at room temperature for 1 hour. The reaction solution was transferred to a separatory funnel, the lower layer was separated off, and the remaining upper layer was washed twice with 20 mL of water, then once with 20 mL of saturated aqueous sodium bicarbonate solution, and dried over anhydrous sodium sulfate. The solids were filtered off and the resulting solution was concentrated under reduced pressure to yield 45.4 g of a colorless and transparent liquid. The liquid was taken as intermediate L. Finally, 62.4 g of allyl acetate and 0.05 g of a 3% isopropanolic chloroplatinic solution were introduced into a 100 mL four-neck flask equipped with a stirrer, a thermometer, a reflux condenser and an addition funnel and were heated to 100°C under stirring. To this, 27.0 g of the intermediate L was gradually added dropwise from the addition funnel so as to maintain the reaction temperature at 90°C. After completion of the addition, the reaction solution was heated for 1 hour at 100°C. After cooling, the reaction solution was concentrated under reduced pressure to yield 33.3 g of a very light brown liquid. Analysis of this reaction product by ²⁹Si-nuclear magnetic resonance analysis showed it to be carbosiloxane dendrimer represented by the average molecular formula given below. Using gel permeation chromatography, this carbosiloxane dendrimer was found to have a number-average molecular weight of 2,894 (polystyrene basis) and a dispersion index of 1.73.

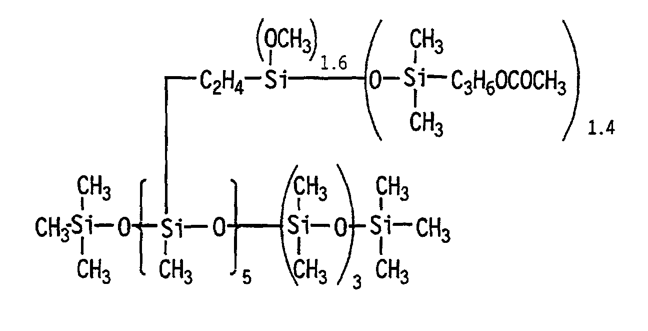

### Example 10

214 g of vinyltrimethoxysilane and 0.16 g of a 3% isopropanolic chloroplatinic acid solution were charged into a 500-mL four-neck flask equipped with a stirrer, a thermometer, a reflux condenser and an addition funnel and were heated to 100°C under stirring. 100 g of polysiloxane represented by the average compositional formula {H(CH₃)₂SiO_{1/2}}₁₀(SiO_{4/2})₅ was gradually added dropwise from the addition funnel so as to maintain the reaction temperature at 100°C. After completion of the addition, the reaction solution was heated for 1 hour at 120°C. After cooling, the reaction solution was concentrated under reduced pressure to give 234 g of a very light brown liquid. The liquid was taken as intermediate M. 468 g of 1,1,3,3-tetramethyldisiloxane, 75 mL of concentrated hydrochloric acid, 150 mL of water and 150 mL of isopropanol were subsequently placed in a 1-L four-neck flask equipped with a stirrer, a thermometer, a reflux condenser and an addition funnel and were stirred. 220 g of the intermediate M prepared as described above was then gradually added dropwise from the addition funnel over 1 hour. After completion of the addition, the reaction solution was stirred at room temperature for 1 hour. The reaction solution was then transferred to a separatory funnel, the lower layer was separated off, and the remaining upper layer solution was washed twice with 100 mL of water, then once with 100 mL of saturated aqueous sodium bicarbonate solution, and dried over anhydrous magnesium sulfate. The solids were filtered off and the resulting solution was concentrated under reduced pressure to yield 273 g of a colorless and transparent liquid. The liquid was taken as intermediate N. Finally, 50.0 g of the intermediate N prepared as above and 0.82 g of a 3% isopropanolic chloroplatinic acid solution were introduced into a 100mL four neck flask and were heated to 100°C under stirring. 18.1 g of N,N-bis(trimethylsilyl)allylamine was gradually added dropwise from the addition funnel to maintain the reaction temperature of 100°C. After completion of the addition, the reaction solution was heated for 1 hour at 120°C and 10.0 g was added thereto and heated under reflux for another 1 hour. After cooling, the reaction solution was concentrated under a reduced pressure to give 66.5 g of a very light brown liquid. Analysis of this reaction product by ²⁹Si-nuclear magnetic resonance analysis showed it to be carbosiloxane dendrimer represented by the average molecular formula shown below. Using gel permeation chromatography, this carbosiloxane dendrimer was found to have a number-average molecular weight of 4,830 (polystyrene basis) and a dispersion index of 1.52.

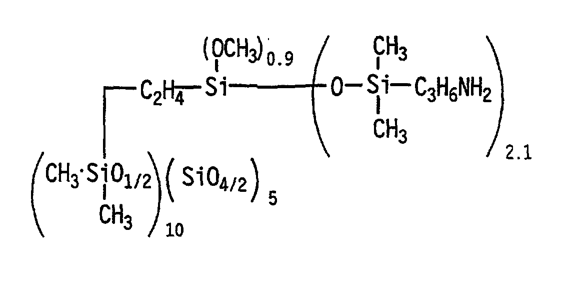

## Claims

1. Carbosiloxane dendrimer that contains at least one siloxane unit with the general formula
X¹R¹ ₐSiO_{(3-a)/2}
where R¹ is C₁ to C₁₀ alkyl or aryl, a is an integer from 0 to 2, and X¹ is the silylalkyl group with the following formula at i = 1 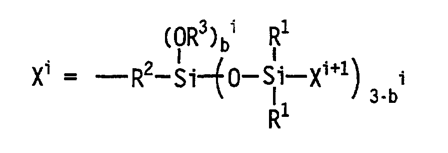 where R¹ is C₁ to C₁₀ alkyl or aryl , R² is C₂ to C₁₀ alkylene, R³ is C₁ to C₁₀ alkyl, Xⁱ⁺¹ is the above-defined silylalkyl group at i = i + 1 , an unsubstituted monovalent hydrocarbon group, a monovalent hydrocarbon group substituted by an atom other than a carbon or hydrogen atom, or a monovalent hydrocarbon group substituted by a group containing an atom other than a carbon or hydrogen atom, i is an integer with a value from 1 to 10 that specifies the generation of said silylalkyl group, and bⁱ is an integer from 0 to 3 with the proviso that b¹ in at least one X¹ in each molecule is an integer from 0 to 2, and which has at least one siloxy group represented by the general formula: 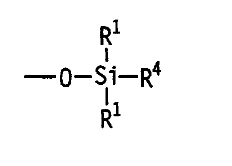 wherein R¹ is a C₁ to C₁₀ alkyl or aryl group, and R⁴ is a monovalent unsubstituted hydrocarbon group, a monovalent hydrocarbon group substituted by an atom other than a carbon or hydrogen atom, or a monovalent hydrocarbon group substituted by a group containing an atom other than a carbon or hydrogen atom and
wherein when more than 1 siloxane unit is present the subject siloxane units is the same or different.

2. The carbosiloxane dendrimer according to claim 1, that has the following general formula 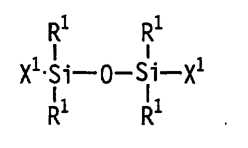 in which R¹ and X¹ are defined as in claim 1.

3. The carbosiloxane dendrimer according to claim 1 comprising a polysiloxane structure containing at least 2 silicon atoms as a core and at least one of said siloxane units.

4. The carbosiloxane dendrimer according to claim 1, that contains at least one difunctional siloxane unit with the general formula R¹₂SiO_{2/2} or X¹R¹SiO_{2/2} whereby R¹ and X¹ are defined as in claim 1 in the polysiloxane structure comprising the core.

5. The carbosiloxane dendrimer according to claim 1, wherein the polysiloxane structure comprising the core contains at least 5 silicon atoms and is composed of siloxane units selected from the general formulas R¹SiO_{3/2}, X¹SiO_{3/2}, R¹₃SiO_{1/2}, and X¹R¹₂SiO_{1/2} whereby R¹ and X¹ are defined as in claim 1.

6. The carbosiloxane dendrimer according to claim 1, wherein the polysiloxane structure comprising the core contains at least 6 silicon atoms and is composed of siloxane units selected from the general formulas SiO_{4/2}, R¹₃SiO_{1/2}, and X¹R¹₂SiO_{1/2} whereby R¹ and X¹ are defined as in claim 1.

7. The carbosiloxane dendrimer according to any of the preceding claims, whose molecular weight, determined on a polystyrene basis, has a dispersity index no greater than 2.

8. A process for preparing carbosiloxane dendrimers comprising:
a) reacting an Si-H-functional polysiloxane that contains at least 2 silicon atoms and at least one siloxane unit with the general formula HR¹ₐSi_{(3-a)/2} whereby said silicon atoms may belong to said siloxane unit(s) or may be separate and R¹ is independently selected from C₁ to C₁₀ alkyl or aryl and a is an integer from 0 to 2 with an alkenyl-functional alkoxy silane with the general formula R⁵Si(OR³)₃, whereby R³ is independently selected from C₁ to C₁₀ alkyl and R⁵ is selected from C₂ to C₁₀ alkenyl in the presence of a platinum containing catalyst;
b) reacting the product of step a) with a disiloxane with the general formula 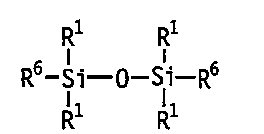 whereby R¹ is independently selected from C₁ to C₁₀ alkyl or aryl and R⁶ is either hydrogen or R⁴ as defined in claim 1 under acidic conditions
c) in case R⁶ in the disiloxane in step b) is hydrogen addition-reacting the reaction product of step b) with a compound having in its molecule one non-conjugated alkenyl group and optionally at least one atom other than a carbon or hydrogen atom or a group containing an atom other than a carbon or hydrogen atom in the presence of a platinum transition metal catalyst.

9. The process of claim 8 further comprising a step d) wherein the product of step b) in case R⁶ is hydrogen is used as SiH-functional polysiloxane for reacting with an alkenyl-functional alkoxysilane as defined for step a) and thereafter reacting the product of step d) with a disiloxane with the general formula 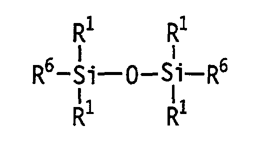 whereby R¹ is independently selected from C₁ to C₁₀ alkyl or aryl and R⁶ is either hydrogen or R⁴ as defined in claim 1 under acidic conditions and in case R⁶ is hydrogen reacting said product in accordance with step c).

10. The process of claim 9 whereby step b) under the proviso that R⁶ is hydrogen and step d) are conducted in alternating sequence whereby, if the last step in said sequence is step d) this product is thereafter reacted with 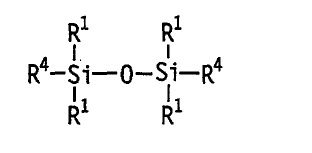 under acidic conditions, wherein R¹ and R⁴ are defined as in claim 1 or if the last step in said sequence is step b) this product is thereafter reacted with a compound having in its molecule one non-conjugated alkenyl group and optionally at least one atom other than a carbon or hydrogen atom or a group containing an atom other than a carbon or hydrogen atom in the presence of a platinum transition metal catalyst.

## Patentansprüche

1. Carbosiloxandendrimer, das wenigstens eine Siloxaneinheit mit der allgemeinen Formel
X¹R¹ ₐSiO_{(3-a)/2}
enthält, worin R¹ gleich C₁- bis C₁₀-Alkyl oder Aryl ist, a eine ganze Zahl von 0 bis 2 ist und X¹ die Silylalkylgruppe mit der folgenden Formel bei i = 1 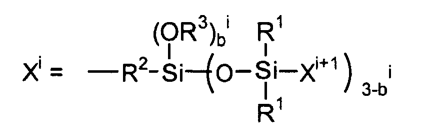 ist, worin R¹ gleich C₁- bis C₁₀-Alkyl oder Aryl ist, R² gleich C₂- bis C₁₀-Alkylen ist, R³ gleich C₁- bis C₁₀-Alkyl ist, Xⁱ⁺¹ die oben definierte Silylalkylgruppe bei i = i + 1, eine unsubstituierte einbindige Kohlenwasserstoffgruppe, eine einbindige Kohlenwasserstoffgruppe, die mit einem Atom substituiert ist, das sich von einem Kohlenstoff- oder Wasserstoffatom unterscheidet, oder eine einbindige Kohlenwasserstoffgruppe ist, die mit einer Gruppe substituiert ist, die ein Atom enthält, das sich von einem Kohlenstoff- oder Wasserstoffatom unterscheidet, i eine ganze Zahl mit einem Wert von 1 bis 10 ist, die die Generation dieser Silylalkylgruppe spezifiziert, und bⁱ eine ganze Zahl von 0 bis 3 ist, unter der Voraussetzung, dass b¹ in wenigstens einem X¹ in jedem Molekül eine ganze Zahl von 0 bis 2 ist und dass wenigstens eine Siloxygruppe, die durch die allgemeine Formel: 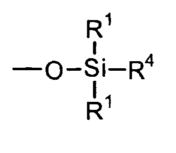 wiedergegeben ist, vorhanden ist, worin R¹ eine C₁- bis C₁₀-Alkyl- oder Arylgruppe ist und R⁴ eine einbindige unsubstituierte Kohlenwasserstoffgruppe, eine einbindige Kohlenwasserstoffgruppe, die mit einem Atom substituiert ist, das sich von einem Kohlenstoff- oder Wasserstoffatom unterscheidet, oder eine einbindige Kohlenwasserstoffgruppe ist, die mit einer Gruppe substituiert ist, die ein Atom enthält, das sich von einem Kohlenstoff- oder Wasserstoffatom unterscheidet, und wobei, wenn mehr als eine Siloxaneinheit vorhanden ist, die betreffenden Siloxaneinheiten gleich oder unterschiedlich sind.

2. Carbosiloxandendrimer gemäß Anspruch 1, das die folgende allgemeine Formel 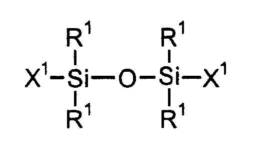 aufweist, in der R¹ und X¹ wie in Anspruch 1 definiert sind.

3. Carbosiloxandendrimer gemäß Anspruch 1, enthaltend eine Polysiloxanstruktur, die wenigstens 2 Siliciumatome als Kern und wenigstens eine dieser Siloxaneinheiten enthält.

4. Carbosiloxandendrimer gemäß Anspruch 1, das wenigstens eine difunktionelle Siloxaneinheit mit der allgemeinen Formel R¹₂SiO_{2/2} oder X¹R¹SiO_{2/2}, wobei R¹ und X¹ wie in Anspruch 1 definiert sind, in der Polysiloxanstruktur enthält, die den Kern enthält.

5. Carbosiloxandendrimer gemäß Anspruch 1, wobei die Polysiloxanstruktur, die den Kern enthält, wenigstens 5 Siliciumatome enthält und aus Siloxaneinheiten zusammengesetzt ist, die ausgewählt sind aus den allgemeinen Formeln R¹SiO_{3/2}, X¹SiO_{3/2}, R¹₃SiO_{1/2}, und X¹R¹₂SiO_{1/2}, wobei R¹ und X¹ wie in Anspruch 1 definiert sind.

6. Carbosiloxandendrimer gemäß Anspruch 1, wobei die Polysiloxanstruktur, die den Kern enthält, wenigstens 6 Siliciumatome enthält und aus Siloxaneinheiten zusammengesetzt ist, die ausgewählt sind aus den allgemeinen Formeln SiO_{4/2}, R¹₃SiO_{1/2}, und X¹R¹₂SiO_{1/2}, wobei R¹ und X¹ wie in Anspruch 1 definiert sind.

7. Carbosiloxandendrimer gemäß einem der vorstehenden Ansprüche, dessen auf Polystyrolbasis bestimmtes Molekulargewicht einen Dispersitätsindex von nicht mehr als 2 aufweist.

8. Verfahren zur Herstellung von Carbosiloxandendrimeren, umfassend:
a) Umsetzen eines Si-H-funktionellen Polysiloxans, das wenigstens zwei Siliciumatome und wenigstens eine Siloxaneinheit mit der allgemeinen Formel HR¹ₐSi_{(3-a)/2} enthält, wobei diese Siliciumatome zu dieser(n) Siloxaneinheit(en) gehören oder davon unabhängig sein können und R¹ unabhängig ausgewählt ist aus C₁- bis C₁₀-Alkyl oder Aryl und a eine ganze Zahl von 0 bis 2 ist, mit einem alkenylfunktionellen Alkoxysilan mit der allgemeinen Formel R⁵Si(OR³)₃, wobei R³ unabhängig ausgewählt ist aus C₁- bis C₁₀-Alkyl und R⁵ ausgewählt ist aus C₂- bis C₁₀-Alkenyl, in Gegenwart eines platinhaltigen Katalysators,
b) Umsetzen des Produkts aus Schritt a) mit einem Disiloxan mit der allgemeinen Formel 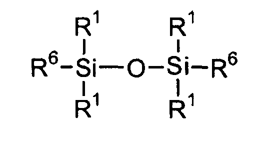 worin R¹ unabhängig ausgewählt ist aus C₁- bis C₁₀-Alkyl oder Aryl und R⁶ entweder Wasserstoff oder R⁴ wie in Anspruch 1 definiert ist, unter sauren Bedingungen,
c) für den Fall, dass R⁶ in dem Disiloxan in Schritt b) Wasserstoff ist, Additionsumsetzen des Reaktionsprodukts aus Schritt b) mit einer Verbindung, die in ihrem Molekül eine nichtkonjugierte Alkenylgruppe und wahlweise wenigstens ein Atom, das sich von einem Kohlenstoff- oder Wasserstoffatom unterscheidet, oder eine Gruppe aufweist, die ein Atom enthält, das sich von einem Kohlenstoff- oder Wasserstoffatom unterscheidet, in Gegenwart eines Platinübergangsmetallkatalysators.

9. Verfahren nach Anspruch 8, das zusätzlich den Schritt d) aufweist, worin das Produkt von Schritt b) für den Fall, dass R⁶ Wasserstoff ist, als SiHfunktionelles Polysiloxan zur Umsetzung mit einem alkenylfunktionellen Alkoxysilan wie in Schritt a) definiert verwendet wird, und danach Umsetzen des Produkts aus Schritt d) mit einem Disiloxan mit der allgemeinen Formel 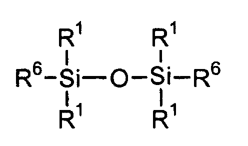 worin R¹ unabhängig ausgewählt ist aus C₁- bis C₁₀-Alkyl oder Aryl und R⁶ entweder Wasserstoff oder R⁴ wie in Anspruch 1 definiert ist, unter sauren Bedingungen, und für den Fall, dass R⁶ Wasserstoff ist, Umsetzen dieses Produkts entsprechend Schritt c).

10. Verfahren nach Anspruch 9, wobei Schritt b), unter der Voraussetzung, dass R⁶ Wasserstoff ist, und Schritt d) in alternierender Reihenfolge durchgeführt werden, wobei, falls der letzte Schritt in dieser Reihenfolge Schritt d) ist, dieses Produkt danach mit 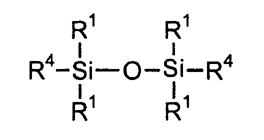 unter sauren Bedingungen umgesetzt wird, worin R¹ und R⁴ wie in Anspruch 1 definiert sind, oder, falls der letzte Schritt in dieser Reihenfolge Schritt b) ist, dieses Produkt danach mit einer Verbindung umgesetzt wird, die in ihrem Molekül eine nichtkonjugierte Alkenylgruppe und wahlweise wenigstens ein Atom, das sich von einem Kohlenstoff- oder Wasserstoffatom unterscheidet, oder eine Gruppe aufweist, die ein Atom enthält, das sich von einem Kohlenstoff- oder Wasserstoffatom unterscheidet, in Gegenwart eines Platinübergangsmetallkatalysators.

## Revendications

1. Dendrimère de carbosiloxane qui contient au moins une unité de siloxane de formule générale
X¹R¹ ₐSiO_{(3-a)/2}
où R¹ est C₁ à C₁₀ alkyle ou aryle, a est un entier de 0 à 2, et X¹ est le groupe silylalkyle de formule suivante pour i = 1 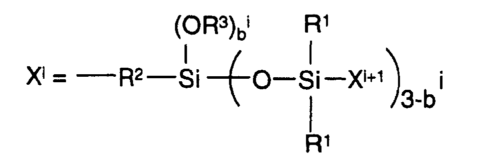 où R¹ est C₁ à C₁₀ alkyle ou aryle, R² est C₂ à C₁₀ alkylène, R³ est C₁ à C₁₀ alkyle, Xⁱ⁺¹ est le groupe silylalkyle défini ci-dessus pour i = i + 1, un groupe hydrocarboné monovalent non substitué, un groupe hydrocarboné monovalent substitué par un atome autre qu'un atome de carbone ou d'hydrogène, ou un groupe hydrocarboné monovalent substitué par un groupe contenant un atome autre qu'un atome de carbone ou d'hydrogène, i est un entier ayant une valeur de 1 à 10 qui spécifie la génération dudit groupe silylalkyle, et bⁱ est un entier de 0 à 3 avec la condition que b¹ dans au moins un X¹ dans chaque molécule est un entier de 0 à 2, et qui a au moins un groupe siloxy représenté par la formule générale : 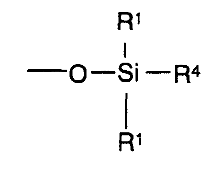 où R¹ est un groupe C₁ à C₁₀ alkyle ou aryle, et R⁴ est un groupe hydrocarboné non substitué monovalent, un groupe hydrocarboné monovalent substitué par un atome autre qu'un atome de carbone ou d'hydrogène, ou un groupe hydrocarboné monovalent substitué par un groupe contenant un atome autre qu'un atome de carbone ou d'hydrogène et
où quand plus d'une unité de siloxane est présente, les unités de siloxane en question sont identiques ou différentes.

2. Dendrimère de carbosiloxane selon la revendication 1, qui a la formule générale suivante 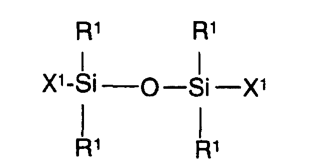 où R¹ et X¹ sont définis comme dans la revendication 1.

3. Dendrimère de carbosiloxane selon la revendication 1 comprenant une structure de polysiloxane contenant au moins deux atomes de silicium comme noyau et au moins l'une desdites unités de siloxane.

4. Dendrimère de carbosiloxane selon la revendication 1 qui contient au moins une unité de siloxane difonctionnelle de formule générale R¹₂SiO_{2/2} ou X¹R¹SiO_{2/2} où R¹ et X¹ sont définis comme dans la revendication 1 dans la structure de polysiloxane comprenant le noyau.

5. Dendrimère de carbosiloxane selon la revendication 1, où la structure de polysiloxane comprenant le noyau contient au moins 5 atomes de silicium et est composée d'unités de siloxane choisies parmi les formules générales R¹SiO_{3/2}, X¹SiO_{3/2}, R¹₃SiO_{1/2} et X¹R¹₂SiO_{1/2} où R¹ et X¹ sont définis comme dans la revendication 1.

6. Dendrimère de carbosiloxane selon la revendication 1, où la structure de polysiloxane comprenant le noyau contient au moins 6 atomes de silicium et est composée d'unités de siloxane choisies parmi les formules générales SiO_{4/2}, R¹₃SiO_{1/2} et X¹R¹₂SiO_{1/2} où R¹ et X¹ sont définis comme dans la revendication 1.

7. Dendrimère de carbosiloxane selon l'une quelconque des revendications précédentes dont la masse moléculaire, déterminée sur une base de polystyrène, a un indice de dispersité ne dépassant pas 2.

8. Procédé pour préparer des dendrimères de carbosiloxane comprenant :
a) la réaction d'un polysiloxane Si-H-fonctionnel qui contient au moins deux atomes de silicium et au moins une unité de siloxane de formule générale HR¹ₐSi_{(3-a)/2} où lesdits atomes de silicium peuvent appartenir à ladite unité ou auxdites unités de siloxane ou peuvent être séparés et R¹ est choisi indépendamment parmi C₁ à C₁₀ alkyle ou aryle et a est un entier de 0 à 2 avec un alcoxysilane alcényle-fonctionnel de formule générale R⁵Si(OR³)₃, où R³ est choisi indépendamment parmi C₁ à C₁₀ alkyle et R⁵ est choisi parmi C₂ à C₁₀ alcényle en présence d'un catalyseur contenant du platine ;
b) la réaction du produit de l'étape a) avec un disiloxane de formule générale 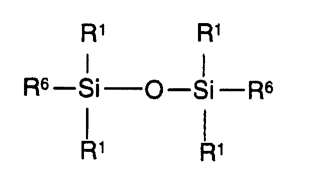 où R¹ est choisi indépendamment parmi C₁ à C₁₀ alkyle ou aryle et R⁶ est l'hydrogène ou R⁴ défini comme dans la revendication 1 dans des conditions acides ;
c) dans le cas où R⁶ dans le disiloxane dans l'étape b) est l'hydrogène, la réaction d'addition du produit réactionnel de l'étape b) avec un composé ayant dans sa molécule un groupe alcényle non conjugué et éventuellement au moins un atome autre qu'un atome de carbone ou d'hydrogène ou un groupe contenant un atome autre qu'un atome de carbone ou d'hydrogène en présence d'un catalyseur de métal de transition et de platine.

9. Procédé selon la revendication 8 comprenant en outre une étape d) où le produit de l'étape b) dans le cas où R⁶ est l'hydrogène est utilisé comme polysiloxane SiH-fonctionnel pour réagir avec un alcoxysilane alcényle-fonctionnel défini comme pour l'étape a) puis la réaction du produit de l'étape d) avec un disiloxane de formule générale 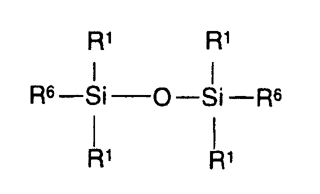 où R¹ est choisi indépendamment parmi C₁ à C₁₀ alkyle ou aryle et R⁶ est l'hydrogène ou R⁴ défini comme dans la revendication 1 dans des conditions acides et dans le cas où R⁶ est l'hydrogène la réaction dudit produit selon l'étape c).

10. Procédé selon la revendication 9, où l'étape b) à condition que R⁶ soit l'hydrogène et l'étape d) sont conduites dans une autre succession où, si la dernière étape dans ladite succession est l'étape d), ce produit est ensuite mis à réagir avec 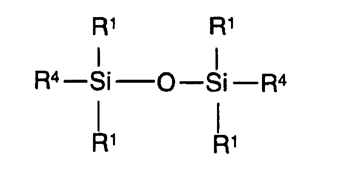 dans des conditions acides, où R¹ et R⁴ sont définis comme dans la revendication 1 ou bien, si la dernière étape dans ladite succession est l'étape b), ce produit est ensuite mis à réagir avec un composé ayant dans sa molécule un groupe alcényle non conjugué et éventuellement au moins un atome autre qu'un atome de carbone ou d'hydrogène ou un groupe contenant un atome autre qu'un atome de carbone ou d'hydrogène en présence d'un catalyseur de métal de transition et de platine.
